# EUROPEAN PATENT APPLICATION

(11) **EP 2 161 673 A1**
(43) Date of publication of application: **10.03.2010**
(21) Application number: 09252034.5
(22) Date of filing: 21.08.2009
(51) Int. Cl.: G06F 21/02

(54) **Method and system for protecting data**

(30) Priority: 26.08.2008 TW 97132572
(71) Applicant: ASUSTEK Computer Inc., PEI TOU Taipei City 112 (TW)
(72) Inventor: Wang, Chin-Yu, Taipei (TW)
(74) Representative: Oxley, Robin John George

(57) **Abstract**

A method and a system for protecting data are provided. When a computer system is powered on, a verification code is compared with a predetermined verification code (S220). If the verification code matches the predetermined verification code, an encrypted configuration data stored in a configuration data block of a storage device is decrypted with the verification code to obtain an original configuration data of the storage device (S230). Thereby, data loss is effectively prevented and a data protection mechanism is provided.

## Description

### BACKGROUND OF THE INVENTION

### 1. Field of the Invention

The present invention generally relates to a data protection mechanism, and more particularly, to a method and a system for protecting data in a storage device in a computer system.

### 2. Description of Related Art

Along with the development of technologies, different computer systems have become one of the most indispensable tools in our daily life, and accordingly different types of storage devices are also developed for storing data in these computer systems, wherein hard disk (HD) offers the largest storage capacity among all the existing storage devices. Since the conventional paperwork has been gradually carried out by various computer systems, nowadays, most important data (for example, conference records, meeting reports, and confidential data, etc) is stored in different storage devices. As a result, if such a storage device is lost, the data stored in this storage device may be misappropriated.

In order to prevent aforementioned situation, hard disks with password protection are brought into the market. A controller in such a hard disk locks or unlocks the hard disk according to special instructions issued by a basic input output system (BIOS). However, most existing hard disks in the market do not provide such a function yet so that when a hard disk without password protection is lost, the data stored therein is not protected and accordingly data leakage may be resulted.

Thereby, a mechanism for protecting data in a storage device regardless of whether the storage device offers a password protection mechanism is desired.

### SUMMARY OF THE INVENTION

Accordingly, the present invention is directed to a data protection method, wherein the access to a storage device is controlled by encrypting and decrypting a configuration data in the storage device.

The present invention is directed to a data protection system for protecting data in a storage device in a computer system.

The present invention provides a data protection method. First, a storage device disposed in a computer system is provided, wherein the storage device includes a plurality of blocks and a configuration data block, and the configuration data block stores an encrypted configuration data. Then, a verification code is received when the computer system is powered on. Next, the verification code is compared with a predetermined verification code. If the verification code matches the predetermined verification code, the encrypted configuration data is decrypted with the verification code to obtain an original configuration data.

According to the present invention, the step of decrypting the encrypted configuration data with the verification code further includes following sub-steps. First, the encrypted configuration data is read from the configuration data block of the storage device. Then, the encrypted configuration data is decrypted with the verification code to obtain the original configuration data. Next, the encrypted configuration data in the configuration data block is deleted. Finally, the original configuration data is written into the configuration data block.

According to the present invention, the data protection method further includes following steps. An encryption flag is set to determine whether to start a data protection mechanism. The encryption flag is checked when the computer system is powered off or enters an interruption mode. If the encryption flag is greater than or equal to a specific value, the original configuration data in the configuration data block is encrypted to obtain the encrypted configuration data. After that, the original configuration data in the configuration data block is deleted. Finally, the encrypted configuration data is written into the configuration data block.

According to the present invention, the data protection method further includes checking the encryption flag after the computer system is powered on to determine whether the storage device is encrypted, wherein if the encryption flag is greater than or equal to the specific value, the verification code is received and the encrypted configuration data in the configuration data block is decrypted, and if the encryption flag is smaller than the specific value, it is determined that the storage device is not encrypted and a general boot-up procedure is executed.

The present invention provides a data protection system including a storage device and a boot-up module. The storage device is disposed in a computer system and includes a plurality of blocks and a configuration data block, wherein the configuration data block stores an encrypted configuration data. The boot-up module is coupled to the storage device and includes a verification code comparison module and a decryption module. After the computer system is powered on, the verification code comparison module receives a verification code and compares the verification code with a predetermined verification code. In addition, the decryption module decrypts the encrypted configuration data in the configuration data block according to the verification code to obtain an original configuration data.

According to the present invention, the data protection system further includes an encryption flag and a power state detection module. The encryption flag indicates whether to start a data protection mechanism. The power state detection module is coupled to the boot-up module for checking a power state when the computer system is powered on. If the computer system is started from an interruption mode, the power state detection module controls the boot-up module to execute a power resume procedure, and if the computer system is started from an off state, the power state detection module controls the boot-up module to execute an operating system boot-up procedure.

According to the present invention, the storage device may be a hard disk, the encrypted configuration data may be a master boot record (MBR) in the hard disk, the verification code may be a password input by a user or a hardware serial number, and the boot-up module may be a basic input output system (BIOS).

According to the present invention, a configuration data in a storage device is encrypted and data stored in the storage device cannot be read before the encrypted configuration data is decrypted. As a result, the data stored in the storage device is protected. In addition, a verification code is compared with a predetermined verification code, and if the verification code matches the predetermined verification code, the encrypted configuration data of the storage device is decrypted with the verification code. Thereby, the data stored in the storage device can be protected even if the storage device does not provide any data protection mechanism.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a diagram of a data protection system according to a first embodiment of the present invention.

FIG. 2 is a flowchart of a data protection method according to the first embodiment of the present invention.

FIG. 3 is a flowchart of various sub-steps in step S230 according to the first embodiment of the present invention.

FIG. 4 is a diagram of a data protection system according to a second embodiment of the present invention.

FIG. 5 is a flowchart of a data protection method according to the second embodiment of the present invention.

FIG. 6 is a flowchart of another data protection method according to the second embodiment of the present invention.

FIG. 7 is a flowchart of various sub-steps in step S620 according to the second embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

Since most storage devices in today's market do not provide any password protection function, the present invention provides a method and a system for protecting data stored in such a storage device. For the convenience of description, it is assumed in following descriptions that the method and system in the present invention are applied in a computer system and the storage device is a hard disk disposed in the computer system. However, foregoing assumption is not intended to limiting the scope of the present invention, and the method and system in the present invention may also be applied to different devices by those having ordinary knowledge in the art according to their actual requirements. A first embodiment of the present embodiment will be described below.

### First Embodiment

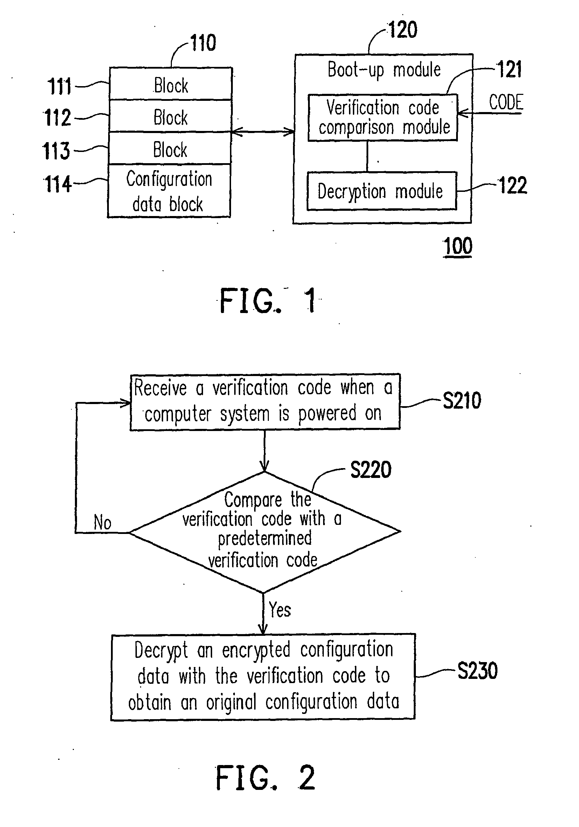

FIG. 1 is a diagram of a data protection system according to the first embodiment of the present invention. Referring to FIG. 1, the data protection system 100 includes a storage device 110 and a boot-up module 120 coupled to the storage device 110.

Taking the structure of an existing hard disk as an example, the hard disk is divided into two sectors, wherein one sector is a master boot record (MBR) sector and the other sector is for actually storing data. The sector for actually storing data in a hard disk contains a plurality of partitions (i.e., drive C: and drive D:, etc). A partition table is recorded in the MBR sector for recording the distribution of each partition (i.e., the start address, block capacity, and end address of the partition) in the hard disk.

Since the storage device 110 is assumed to be a hard disk in the present embodiment, the storage device 110 includes a plurality of blocks 111∼113 and a configuration data block 114. The blocks 111∼113 may be partitions in the hard disk, and herein it is assumed that the storage device 110 in the present embodiment has three partitions (i.e., blocks 111, 112, and 113). The configuration data block 114 stores an encrypted configuration data (i.e., the encrypted MBR). Accordingly, a computer system cannot obtain the start address of each partition in the storage device 110, and accordingly cannot read data in each of the blocks 111∼113 in the storage device 110 before the MBR in the configuration data block 114 is decrypted.

Referring to FIG. 1, the boot-up module 120 decrypts the encrypted configuration data in the configuration data block 114 to restore an original configuration data. The boot-up module 120 includes a verification code comparison module 121 and a decryption module 122. The verification code comparison module 121 receives a verification code CODE and compares the verification code CODE with a predetermined verification code. If the verification code CODE matches the predetermined verification code, the decryption module 122 reads the encrypted configuration data from the configuration data block 114 of the storage device 110 and decrypts the encrypted configuration data to obtain the original MBR of the storage device 110 and accordingly allow the computer system to access the storage device 110.

The verification code CODE may be a password input by a user or a hardware serial number in the computer system, wherein the hardware serial number may be a media access control (MAC) address in a network card. Namely, the access to the storage device 110 is controlled by the verification code comparison module 121. For example, if the verification code comparison module 121 serves a password input by a user as the verification code CODE, only the specific user is authorized to access the storage device 110. If the verification code comparison module 121 serves a hardware serial number as the verification code CODE, the computer system is allowed to access the storage device 110 only when the storage device 110 is connected to a specific hardware device.

When the decryption module 122 decrypts the MBR, the decryption module 122 decrypts the encrypted configuration data in the configuration data block 114 according to the verification code CODE to obtain the original MBR. For example, the decryption module 122 obtains a decryption key according to the verification code CODE or directly serves the verification code CODE as the decryption key. After that, the decryption module 122 decrypts data stored in the configuration data block 114 of the storage device 110 with the decryption key. However, there are many different techniques for encrypting and decrypting data and foregoing decryption method is only used as an example but not for limiting the application of the present invention.

If the present embodiment is implemented as software in a computer system, the boot-up module 120 in the present embodiment may be the basic input output system (BIOS) in the computer system. Regarding an existing computer system, the program codes in the BIOS are always executed when the computer system is powered on or is resumed from an interrupted state (for example, the S1∼S5 modes defined in an advanced configuration power interface, ACPI). Thus, in the present embodiment, a special program code is inserted into the program codes of the BIOS for receiving the verification code and identifying whether the verification code CODE is correct and for decrypting and restoring the original configuration data in the configuration data block 114 of the storage device 110 if the verification code CODE is identified to be correct. As a result, data stored in the storage device 110 is protected.

The present invention further provides a data protection method. Below, steps in the data protection method will be described in detail with reference to the data protection system 100 described above. FIG. 2 is a flowchart of the data protection method according to the first embodiment of the present invention. Referring to both FIG. 1 and FIG. 2, first, in step S210, when the computer system is powered on, the verification code comparison module 121 receives a verification code CODE. To be specific, the MBR in the configuration data block 114 of the storage device 110 is encrypted in order to prevent data in the storage device 110 from being leaked. Thus, when the computer system is powered on, the verification code comparison module 121 receives the verification code CODE to carry out subsequent decryption operations, so that the computer system cannot access the storage device 110 before the MBR in the storage device 110 is decrypted.

As described above, the verification code CODE may be preset in the computer system by a user, and when the computer system boots up, the computer system requests the user to input the verification code CODE so that the boot-up module 120 can obtain the verification code CODE and carry out subsequent comparison operation. In addition, the verification code CODE may also be a hardware serial number (for example, a MAC address) in the computer system, and when the computer system boots up, the boot-up module 120 reads the hardware serial number in the computer system to carry out the subsequent comparison operation.

Next, in step S220, the verification code comparison module 121 compares the received verification code CODE with a predetermined verification code. If the received verification code CODE does not match the predetermined verification code, step S210 is executed, and the verification code comparison module 121 continues to receive a next verification code CODE. If the received verification code CODE matches the predetermined verification code, step S230 is executed.

In step S230, the decryption module 122 decrypts the encrypted configuration data in the configuration data block 114 according to the verification code CODE to obtain the original configuration data. Below, the steps for decrypting the encrypted configuration data in the configuration data block will be described with reference to an example.

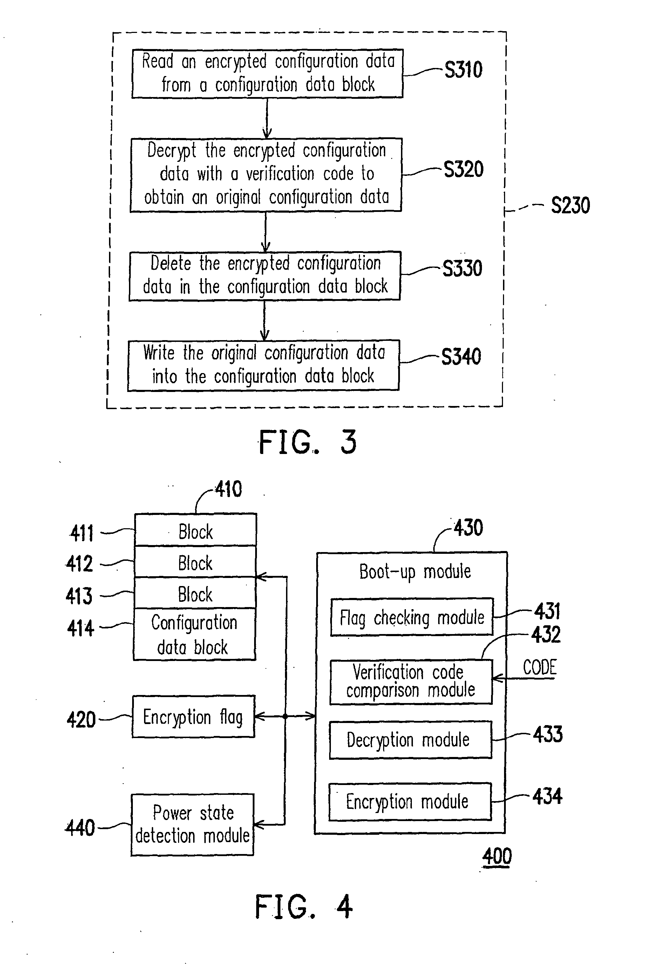

FIG. 3 is a flowchart of various sub-steps in the step S230 according to the first embodiment of the present invention. Referring to FIG. 1 and FIG. 3, first, in step S310, the decryption module 122 reads the encrypted configuration data from the configuration data block 114. Then, in step S320, the decryption module 122 decrypts the configuration data block 114 with the verification code CODE to obtain the original configuration data. After that, in step S330, the decryption module 122 deletes the encrypted configuration data in the configuration data block 114. Finally, in step S340, the decryption module 122 writes the original configuration data into the configuration data block 114. Because the original configuration data records the sector range of each block (the blocks 111∼113), the storage device 110 can be accessed according to the original configuration data.

As described above, in the present embodiment, the encrypted configuration data in the configuration data block is decrypted with the verification code. When the verification code does not match the predetermined verification code, the distribution of each block in the storage device cannot be obtained and accordingly the computer system cannot access the storage device. As a result, data stored in the storage device is protected.

### Second Embodiment

FIG. 4 is a diagram of a data protection system according to the second embodiment of the present invention. Referring to FIG. 4, the data protection system 400 includes a storage device 410, an encryption flag 420, and a boot-up module 430. For the convenience of decryption, it is assumed that the data protection system 400 is applied to a computer system, the storage device 410 is a hard disk disposed in the computer system and which has the same structure as the storage device 110 in FIG. 1, and the configuration data block 414 in the storage device 410 also stores the MBR of the hard disk. In addition, the boot-up module 430 is assumed to be a BIOS in the computer system, wherein the boot-up module 430 includes a flag checking module 431, a verification code comparison module 432, a decryption module 433, and an encryption module 434 according to the functions of the program codes thereof.

In the present embodiment, the encryption flag 420 is either "1" or "0" for indicating whether a hard disk protection mechanism in the present embodiment is started in the computer system. If the computer system is powered on or resumed from an interruption mode (for example, the S1∼S5 modes defined in the ACPI), the flag checking module 431 of the boot-up module 430 reads the encryption flag 420 to determine whether the boot-up module 430 needs to decrypt the MBR in the configuration data block 414.

In the present embodiment, the operations of the verification code comparison module 432 and the decryption module 433 are similar to those of the verification code comparison module 121 and the decryption module 122 in the first embodiment. When the flag checking module 431 determines that the MBR in the configuration data block 414 of the storage device 410 is encrypted according to the encryption flag 420, the verification code comparison module 432 receives a verification code CODE and identifies whether the verification code CODE is correct. If the verification code CODE is correct, the decryption module 433 reads the encrypted configuration data from the configuration data block 414 and decrypts the encrypted configuration data to restore the original configuration data. The decryption module 433 then stores the original configuration data back into the configuration data block 414 to allow the storage device 410 to restore its MBR. After that, the computer system can normally access data stored in the storage device 410. For example, the computer system loads an operating system with boot-up data stored in the storage device

On the other hand, when the computer system receives is about to be powered off or about to enter an interruption mode, the flag checking module 431 also checks the encryption flag 420. If the encryption flag 420 indicates that a data protection mechanism is to be started, the flag checking module 431 controls the encryption module 434 to encrypt the original configuration data in the configuration data block 414 according to the verification code CODE and store the encrypted configuration data back into the configuration data block 414 to cover the original configuration data. After that, the computer system is powered off or enters the interruption mode.

In the embodiment described above, the encryption flag 420 may be set by a user when the operating system is loaded or through options in the BIOS, or the encryption flag 420 may also be set when the computer system is manufactured. The encryption flag 420 may be stored in a non-volatility memory or a flash memory of the BIOS. However, the setting and storage of the encryption flag 420 are not limited in the present invention.

In addition, the data protection system 400 in the present embodiment further includes a power state detection module 440 for checking a power state of the computer system when the computer system is started so that different procedure can be executed accordingly to different power state. When the power state detection module 440 detects that the computer system is started from an interruption mode, the power state detection module 440 controls the boot-up module 430 to execute a power resume procedure. When the power state detection module 440 detects that the computer system is started from an off state, the power state detection module 440 controls the boot-up module 430 to execute an operating system boot-up procedure.

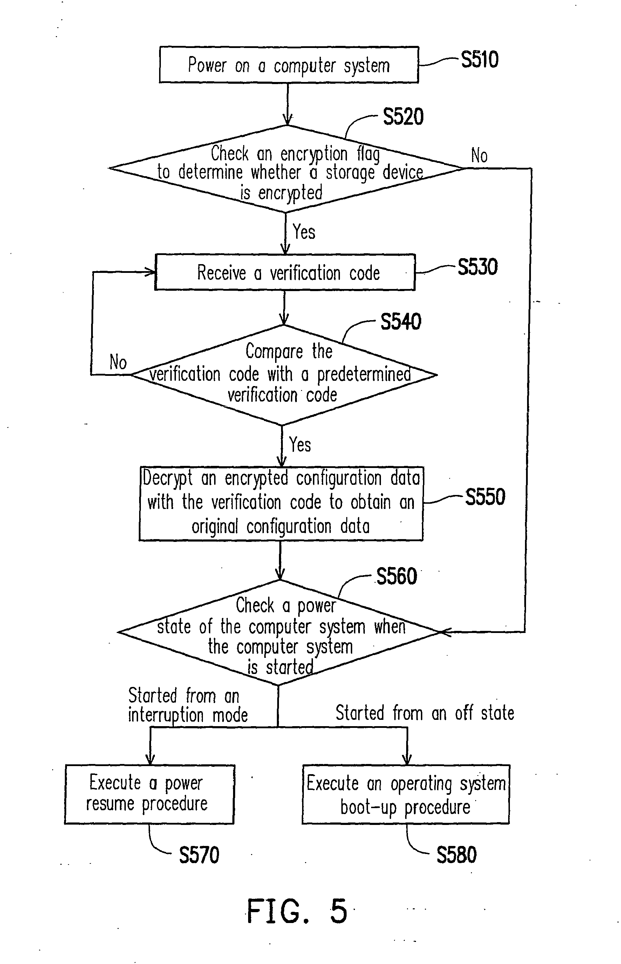

Below, various steps in a data protection method will be described in detail with reference to the data protection system 400 described above. FIG. 5 is a flowchart of the data protection method according to the second embodiment of the present invention. Referring to FIG. 4 and FIG. 5, in step S510, first, the computer system is powered on. After that, the boot-up module 430 performs an initialization operation.

Next, in step S520, the flag checking module 431 checks the encryption flag 420 to determine whether the configuration data in the storage device 410 is encrypted. To be specific, if the encryption flag 420 is set to starting a data protection mechanism when the computer system is previously powered on, the encryption module 434 encrypts the MBR in the storage device 410 when the computer system is powered off or enters an interruption mode. Thus, when the flag checking module 431 detects that the encryption flag 420 is set to starting the data protection mechanism, which means the storage device 410 is encrypted, step S530 is executed to restore the MBR. Contrarily, if the encryption flag 420 is set to not starting the data protection mechanism, which means the storage device 410 is not encrypted, step S560 is directly executed.

The following steps S530∼S550 are the same as or similar to the steps S210∼S230 of the data protection method described in the first embodiment therefore will not be described herein. Step S560 is executed after the decryption module 433 restores the MBR.

In step S560, the power state detection module 440 detects the power state of the computer system when the computer system is powered on so as to execute different procedure corresponding to the power state of the computer system. When the computer system is started from an interruption mode, step S570 is executed. In step S570, the power state detection module controls the boot-up module 430 to execute a power resume procedure to resume the power supply of each device. After that, the computer system accesses data according to the original configuration data obtained above.

On the other hand, when the computer system is started from an off state, step S580 is executed. In step S580, the power state detection module 440 controls the boot-up module 430 to read the original configuration data and execute an operating system boot-up procedure.

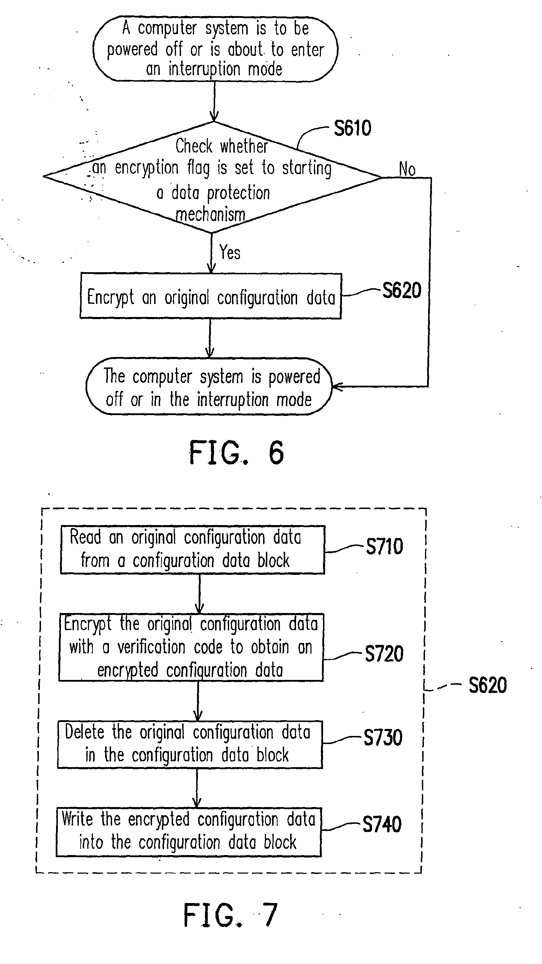

In the present embodiment, if the encryption flag 420 is set to starting the data protection mechanism, the original configuration data is encrypted when the computer system is powered off or enters the interruption mode. Otherwise, if the encryption flag 420 is set to not starting the data protection mechanism, the original configuration data is not encrypted when the computer system is powered off or enters the interruption mode. Below, the data protection method in the present embodiment when the computer system is powered off or enters the interruption mode will be described with reference to FIG. 6.

FIG. 6 is a flowchart of a data protection method according to the second embodiment of the present invention. Referring to FIG. 4 and FIG. 6, in step S610, when the computer system is about to be powered off or enter the interruption mode, the flag checking module 431 checks whether the encryption flag 420 is set to starting the data protection mechanism so as to determine whether to encrypt data in the storage device 410.

Next, when the flag checking module 431 detects that the encryption flag 420 is set to starting the data protection mechanism, in step S620, the encryption module 434 encrypts the original configuration data in the configuration data block 414. Namely, the encryption module 434 encrypts the storage device 410 before the computer system is powered off or enters the interruption mode.

Taking an existing computer system as an example, the program codes in the BIOS of the computer system are executed when the computer system is about to be powered off or enter the interruption mode. In the present embodiment, because the boot-up module 430 is the BIOS in the computer system, the flag checking module 431 in the boot-up module 430 is first controlled to check the encryption flag 420 when the computer system is about to be powered off or enter the interruption mode. If the flag checking module 431 detects that the encryption flag 420 is set to "1", the flag checking module 431 controls the encryption module 434 to encrypt the original configuration data in the configuration data block 114. Contrarily, if the flag checking module 431 detects that the encryption flag 420 is set to "0", the computer system is directly powered off or directly enters the interruption mode.

Below, the method for encrypting the original configuration data will be further described with reference to an example. FIG. 7 is a flowchart of various steps in the step S620 according to the second embodiment of the present invention. Referring to FIG. 4 and FIG. 7, first, in step S710, the encryption module 434 reads the original configuration data from the configuration data block 414. Next, in step S720, the encryption module 434 encrypts the original configuration data in the configuration data block 414 with the verification code CODE to obtain the encrypted configuration data. Herein the encryption module 434 may encode the original configuration data. Since there are many different techniques for encoding data, the encoding method in the present embodiment will not be described herein.

After that, in step S730, the encryption module 434 deletes the original configuration data in the configuration data block 414. Finally, in step S740, the encryption module 434 writes the encrypted configuration data into the configuration data block 414 of the storage device 410. Accordingly, the computer system cannot obtain the distribution of each block in the configuration data block 414 of the storage device 410 and accordingly cannot read data in the storage device 410 before the encrypted configuration data is decrypted.

As described above, the method and system for protecting data provided by the present invention have at least following advantages:
1. Data leakage can be effectively prevented by encrypting/decrypting a configuration data block in a storage device even if the storage device does not provide any password protection.
2. Whether an encrypted configuration data is to be decrypted is determined by comparing a verification code with a predetermined verification code. Thus, if the verification code does not match the predetermined verification code, the computer system cannot obtain the configuration data of the storage device and accordingly cannot access data stored therein. As a result, data in the storage device is protected.
3. The distribution of blocks in the storage device cannot be obtained after the configuration data in the configuration data block is encrypted. Accordingly, if the storage device is lost or stolen, no computer system can read the data in the storage device and accordingly the data in the storage device is protected.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A data protection method in a computer system with a storage device having a plurality of blocks and a configuration data block, the configuration data block storing an encrypted configuration data, the data protection method **characterized by** comprising:
receiving a verification code when the computer system is powered on (S210);
comparing the verification code with a predetermined verification code (S220); and
decrypting the encrypted configuration data in the configuration data block with the verification code to obtain an original configuration data if the verification code matches the predetermined verification code (S230).

2. A data protection method according to claim 1, wherein the step of decrypting the encrypted configuration data with the verification code to obtain the original configuration data comprises:
reading the encrypted configuration data from the storage device (S310);
decrypting the encrypted configuration data with the verification code to obtain the original configuration data (S320);
deleting the encrypted configuration data in the configuration data block (S330); and
writing the original configuration data into the configuration data block (S340).

3. A data protection method according to claim 1 or 2, further comprising:
setting an encryption flag to determine whether to start a data protection mechanism.

4. A data protection method according to claim 3, further comprising the following step if the computer system is powered off or enters an interruption mode:
checking the encryption flag;
encrypting the original configuration data in the configuration data block to obtain the encrypted configuration data when the encryption flag is greater than or equal to a specific value;
deleting the original configuration data in the configuration data block; and
writing the encrypted configuration data into the storage device.

5. A data protection method according to claim 4, wherein if the computer system is powered on (S510), the data protection method comprising:
checking the encryption flag to determine whether the storage device is encrypted (S520);
receiving the verification code to decrypt the encrypted configuration data in the configuration data block when the encryption flag is greater than or equal to the specific value; and
determining that the storage device is not encrypted when the encryption flag is smaller than the specific value.

6. A data protection method according to any preceding claim, wherein after the step of decrypting the encrypted configuration data in the configuration data block to obtain the original configuration data (S550), the data protection method further comprises:
checking a power state of the computer system when the computer system is started (S560);
executing a power resume procedure when the computer system is started from an interruption mode (S570); and
executing an operating system boot-up procedure when the computer system is started from an off state (S580).

7. A data protection method according to any preceding claim, wherein the storage device comprises a hard disk and the encrypted configuration data comprises a master boot record (MBR).

8. A data protection method according to any preceding claim, wherein the verification code comprises one of a password input by a user and a hardware serial number.

9. A data protection system for a computer system, **characterized by** comprising:
a storage device (410), disposed in the computer system, wherein the storage device (410) comprises a plurality of blocks (411 to 413) and a configuration data block (414), and the configuration data block (414) stores an encrypted configuration data; and
a boot-up module (430), coupled to the storage device (410), comprising:
a verification code comparison module (432), for receiving a verification code and comparing the verification code with a predetermined verification code after the computer system is powered on; and
a decryption module (433), for decrypting the encrypted configuration data in the configuration data block (414) with the verification code to obtain an original configuration data.

10. A data protection system according to claim 9, wherein the boot-up module further comprises:
an encryption module (434), for encrypting the original configuration data with the verification code to obtain the encrypted configuration data.

11. A data protection system according to claim 10, further comprising:
an encryption flag (420), for indicating whether to start a data protection mechanism.

12. A data protection system according to claim 11, wherein the boot-up module (430) further comprises:
a flag checking module (431), for checking whether the encryption flag (420) is set;
wherein when the computer system is powered on, the flag checking module (431) checks the encryption flag (420) to determine whether the boot-up module (430) needs to decrypt data stored in the configuration data block (414), and when the computer system is powered off or enters an interruption mode, the flag checking module (431) checks the encryption flag (420) to determine whether the boot-up module (430) needs to encrypt the data stored in the configuration data block (414).

13. A data protection system according to any of claims 10 to 12, wherein the encryption module (434) further reads the original configuration data from the configuration data block (414), encrypts the original configuration data to obtain the encrypted configuration data, and writes the encrypted configuration data into the storage device (410) to cover the original configuration data in the configuration data block (414).

14. A data protection system according to any of claims 9 to 13, wherein the decryption module (433) is configured to read the encrypted configuration data from the configuration data block (414), decrypt the encrypted configuration data to obtain the original configuration data, and write the original configuration data into the storage device (410) to cover the encrypted configuration data in the configuration data block (414).

15. A data protection system according to any of claims 9 to 14, further comprising:
a power state detection module (440), connected to the boot-up module (430), for checking a power state of the computer system when the computer system is started, wherein if the computer system is started from an interruption mode, the power state detection module (440) configured to control the boot-up module (430) to execute a power resume procedure, and if the computer system is started from an off state, the power state detection module (440) controls the boot-up module (430) to execute an operating system boot-up procedure.

16. A data protection system according to any of claims 9 to 15, wherein the storage device (410) comprises a hard disk and the encrypted configuration data comprises a MBR.

17. A data protection system according to any of claims 9 to 16, wherein the verification code comprises one of a password input by a user and a hardware serial number.

18. A data protection system according to any of claims 9 to 17, wherein the boot-up module (430) comprises a basic input output system (BIOS).
